(19) Europäisches Patentamt
European Patent Office
Office européen des brevets

(11) **EP 3 327 624 A1**

(12) **EUROPEAN PATENT APPLICATION**

(43) Date of publication:
**30.05.2018 Bulletin 2018/22**

(51) Int Cl.:
*G06K 9/00* (2006.01)        *G06K 9/46* (2006.01)
*G06K 9/48* (2006.01)        *G06T 7/10* (2017.01)

(21) Application number: **17203111.4**

(22) Date of filing: **22.11.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **25.11.2016   JP 2016229564**
            **29.09.2017   JP 2017190783**

(71) Applicant: **Ricoh Company Ltd.**
**Ohta-ku**
**Tokyo 143-8555 (JP)**

(72) Inventors:
 • **SEIYA, AMANO**
   **Tokyo, 143-8555 (JP)**
 • **SOICHIRO, YOKOTA**
   **Tokyo, 143-8555 (JP)**

 • **JUN, YOSHIDA**
   **Tokyo, 143-8555 (JP)**
 • **TABITO, SUZUKI**
   **Tokyo, 143-8555 (JP)**
 • **YOHICHIROH, OHBAYASHI**
   **Tokyo, 143-8555 (JP)**
 • **HIROKI, KUBOZONO**
   **Tokyo, 143-8555 (JP)**
 • **SHINTAROH, KIDA**
   **Tokyo, 143-8555 (JP)**
 • **DAISUKE, OKADA**
   **Tokyo, 143-8555 (JP)**
 • **SUKEHIRO, KIMURA**
   **Tokyo, 143-8555 (JP)**

(74) Representative: **Schwabe - Sandmair - Marx**
**Patentanwälte Rechtsanwalt**
**Partnerschaft mbB**
**Joseph-Wild-Straße 20**
**81829 München (DE)**

(54) **INFORMATION PROCESSING APPARATUS, IMAGING DEVICE, DEVICE CONTROL SYSTEM, MOBILE OBJECT, INFORMATION PROCESSING METHOD, AND CARRIER MEANS**

(57)    An information processing apparatus (103) includes an acquisition unit (121) to acquire distance image; a generation unit (132) to generate first correspondence data based on the distance image. In the first correspondence data, a position in a horizontal direction and a position in a depth direction are associated with each other. The information processing apparatus (103) further includes a detection unit (143) to detect an aggregation area of pixels of the distance data from the first correspondence data; an extraction unit (143) to extract an outline of the aggregation area detected by the detection unit (140); and a separation unit (144) to separate the aggregation area into sub-aggregation areas based on the outline extracted by the extraction unit (143).

FIG. 1

EP 3 327 624 A1

## Description

BACKGROUND

Technical Field

Embodiments of the present disclosure relate to an information processing apparatus, an imaging device, a device control system, a mobile object, an information processing method, and carrier means.

Background Art

The body structure of an automobile has been developed in view of safety, for example, to protect a pedestrian and a passenger when an automobile clashes the pedestrian. In recent years, however, the technology for detecting a person and automobiles at high speed has been developed with the development of the information processing technology and the image processing technology. Using such a technology, automobiles have been already developed, which automatically brake before clashing an object thus to prevent the clash. There is a need for an automatic control of automobiles to accurately measure the distance to the object, such as person or other cars. In such a measurement, range finding is performed practically using millimeter-wave radars, light detection and ranging (LiDARs), or stereo cameras. For example, when a stereo camera is used for range finding, a disparity image is generated based on the amount of difference (disparity) in a local area between images captured by left and right cameras, thus to measure the distance between a vehicle and an object ahead of the vehicle. The stereo camera subsequently performs a clustering process for detecting a group of disparity pixels (each having approximately the same disparity value) that is present at approximately the same distance from the vehicle, as one object.

To detect an object from the three-dimensional data obtained by the stereo camera, the calculated disparity has to be detected as a group of disparity. When any objects are close to each other, the stereo camera is more likely to erroneously determine that these objects belong to the common group of disparity, thus erroneously detecting a plurality of objects as one combined object. JP-H10-283461 -A (JP-3349060-B), for example, discloses the technology to detect an object surface from a direction in line with the arrangement direction of distance data and further detect an object from the relative position of the object surface.

However, such a technology fails to sufficiently prevent an erroneous detection of a plurality of objects as one combined object. In other words, there is a problem in increasing the accuracy of detection of objects.

SUMMARY

In view of the above, an information processing apparatus, an imaging device, a device control system, a mobile object, an information processing method, and a program according to the present disclosure are provided to increase the accuracy of detection of objects.

In one aspect of this disclosure, there is provided an improved information processing apparatus including an acquisition unit to acquire a distance image having distance data for each pixel; a generation unit to generate first correspondence data based on the distance image; a detection unit to detect an aggregation area of pixels in the distance data from the first correspondence data; an extraction unit to extract an outline of the aggregation area detected by the detection unit; and a separation unit to separate the aggregation area into a plurality of sub-aggregation areas based on the outline extracted by the extraction unit. The first correspondence data associates a position of a pixel in a horizontal direction and a position of a pixel in a depth direction.

In another aspect of this disclosure, there is provided an improved imaging device including the above-described image processing apparatus.

In still another aspect of this disclosure, there is provided an improved device control system including the above-described imaging device and a control unit to control a control target based on a detection result of the imaging device.

In yet another aspect of this disclosure, there is provided an improved mobile object including the above-described device control system. The control target of the control unit is the mobile object.

In further aspect of this disclosure, there is provided an improved information processing method including acquiring a distance image having distance data for each pixel; generating, based on the distance data, first correspondence data associating a position of a pixel in a horizontal direction and a position of a pixel in a depth direction; detecting an aggregation area of pixels of the distance data from the first correspondence data; extracting an outline of the aggregation area; and separating the aggregation area into a plurality of sub-aggregation areas based on characteristics of the outline extracted in the extracting.

In still further aspect of this disclosure, there is provided an improved carrier means carrying computer readable code for controlling a computer to carry out the above-described method.

The present disclosure can increase the accuracy of detection of objects.

BRIEF DESCRIPTION OF THE DRAWINGS

The aforementioned and other aspects, features, and advantages of the present disclosure will be better understood by reference to the following detailed description when considered in connection with the accompanying drawings, wherein:

FIG. 1 is a schematic block diagram of a device control system according to an embodiment of the present disclosure;

FIG. 2 is a schematic block diagram of an imaging unit and an analysis unit;

FIG. 3 is an illustration of the relative positions of imaging lens of cameras and a subject;

FIG. 4 is a block diagram of a function of the analysis unit of FIG. 2;

FIG. 5 is a block diagram of an example of a function of an object detection processing unit of FIG. 4;

FIG. 6 is a block diagram of an example of functions of a road-surface detection processing unit of FIG. 5;

FIG 7 is an illustration of an example of a captured image captured by the imaging unit of FIG. 2;

FIG. 8 is an illustration of an example of a high U map;

FIG. 9 is an illustration of an example of a standard U map;

FIG. 10 is a block diagram of an example of functions of a clustering processing unit of FIG. 5.

FIG 11 is another illustration of an example of a captured image captured by the imaging unit of FIG. 2;

FIG. 12 is an illustration of an example of an isolated area in a standard map generated from the captured image of FIG. 11;

FIG. 13 is an illustration of an area on the disparity image corresponding to the isolated area of FIG. 12;

FIG. 14 is a table of a size range for each object type;

FIG. 15 is an illustration of a rejection process of a rejection unit of FIG. 10;

FIG. 16 is a flowchart of an example of the processing of the clustering processing unit of FIG. 5;

FIG. 17 is a flowchart of an example of the isolated-area detection process;

FIG. 18 is an illustration of an example of pixels after a binarizing process;

FIG. 19 is a block diagram of an example of functions of a surface detection processing unit of FIG. 10;

FIG. 20 is a flowchart of a surface detection process of the surface detection processing unit of FIG. 10;

FIG. 21 is a flowchart of an example of an outline extraction process of an extraction unit of FIG. 19;

FIG. 22 is an illustration of a search process of the extraction unit of FIG. 19;

FIG. 23 is an illustration of a search process of the extraction unit of FIG. 19;

FIG. 24 is an illustration of a search process of the extraction unit of FIG. 19;

FIG. 25 is an illustration of a search process of the extraction unit of FIG. 19;

FIG. 26 is an illustration of connection of pixels in which a search order is recorded;

FIG. 27 is a flowchart of an example of a separation process of a separation unit of FIG. 19;

FIG. 28 is an illustration of determination of a position of an aggregation area;

FIG. 29 is an illustration of how to identify a pixel of interest;

FIG. 30 is an illustration of how to identify a pixel of interest;

FIG. 31 is an illustration of how to generate second correspondence data according to an embodiment;

FIG. 32 is an illustration of how to generate second correspondence data according to another embodiment;

FIG. 33 is an illustration of how to identify a separation position; and

FIG. 34 is an illustration of a separation process of the separation unit of FIG. 19.

The accompanying drawings are intended to depict embodiments of the present disclosure and should not be interpreted to limit the scope thereof. The accompanying drawings are not to be considered as drawn to scale unless explicitly noted.

DETAILED DESCRIPTION

In describing embodiments illustrated in the drawings, specific terminology is employed for the sake of clarity. However, the disclosure of this patent specification is not intended to be limited to the specific terminology so selected and it is to be understood that each specific element includes all technical equivalents that have the same function, operate in a similar manner, and achieve similar results.

Although the embodiments are described with technical limitations with reference to the attached drawings, such description is not intended to limit the scope of the disclosure and all of the components or elements described in the embodiments of this disclosure are not necessarily indispensable.

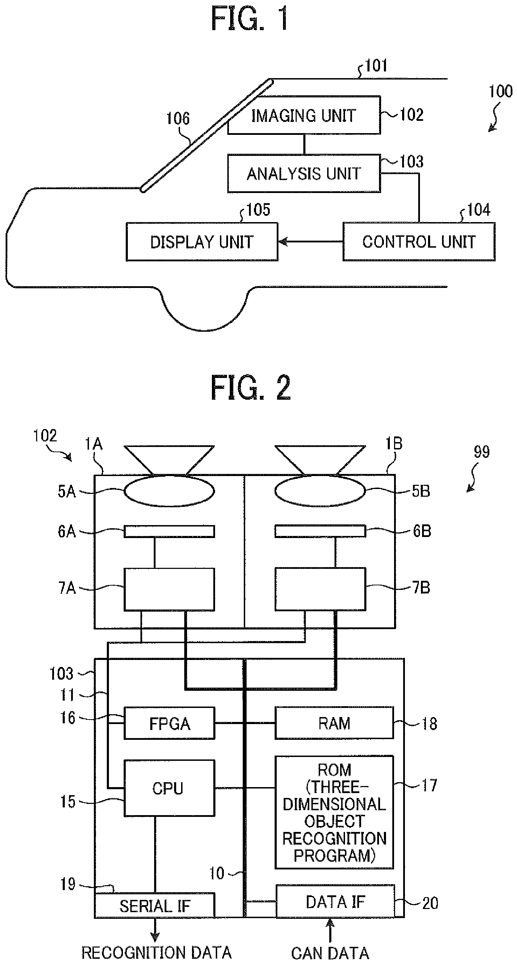

A description is given of embodiments of an information processing apparatus, an imaging device, a device control system, a mobile object, an information processing method, and a program according to the present disclosure, referring to the figures. FIG. 1 is a schematic diagram of a configuration of a device control system 100 according to an embodiment of the present disclosure. As illustrated in FIG. 1, the device control system 100 is mounted on a vehicle 101 such as an automobile which is an example of a mobile body. The device control system 100 includes an imaging unit 102, an analysis unit 103, a control unit 104, and a display unit 105.

The imaging unit 102, which is mounted near the rear-view mirror provided for a front windshield 106 of the vehicle 101 as an example of the mobile object, captures an image, for example, in the traveling direction of the vehicle 101. The imaging unit 102 transmits various data including image data obtained by the imaging operation of the imaging unit 102 to the analysis unit 103. Based on various data transmitted from the imaging unit 102, the analysis unit 103 analyzes a road surface on which the vehicle 101 is traveling, a vehicle in front of the vehicle 101, a pedestrian, an obstacle, and other objects to be recognized. The control unit 104 gives, for example, a warning to the driver of the vehicle 101 using the display unit 105, based on the analysis result of the analysis unit 103. In addition, the control unit 104 performs driving support such as control of various in-vehicle devices, steering control of the vehicle 101, or brake control, based on the analysis result. Hereinafter, the vehicle 101 will be described as an example of the mobile body. The device control system 100 according to the present embodiment can also be applied to ships, aircrafts, and robots.

FIG. 2 is a schematic block diagram of the imaging unit 102 and the analysis unit 103. In this example, the analysis unit 103 operates as an "information processing apparatus", and the pair of the imaging unit 102 and analysis unit 103 operates as an "imaging device" 99. The above-described control unit 104 operates as a "control unit", and controls the device (the vehicle 101 in this example) based on the output result of the imaging device 99. The imaging unit 102 includes a first camera unit 1A for a left eye and a second camera unit 1B for a right eye, and these two camera units 1A and 1B are combined together in parallel. That is, the imaging unit 102 is configured as a stereo camera that captures stereo images. The stereo image is an image including a plurality of captured images (a plurality of captured images corresponding to a plurality of viewpoints in a one-to-one manner) obtained by imaging for each of the plurality of viewpoints, and the imaging unit 102 captures, for example, such a stereo image. The first camera unit 1A and the second camera unit 1B include imaging lenses 5A and 5B, image sensors 6A and 6B, and sensor controllers 7A and 7B, respectively. The image sensors 6A and 6B each is, for example, a charge-coupled device (CCD) image sensor or a complementary metal oxide semiconductor (CMOS) image sensor. CCD is an abbreviation for "Charge Coupled Device". CMOS is an abbreviation of "Complementary Metal-Oxide Semiconductor". The sensor controllers 7A and 7B perform, for example, exposure control of the image sensors 6 A and 6 B, image reading control, communication with an external circuit, and transmission control of image data.

The analysis unit 103 has a data bus line 10, a serial bus line 11, a central processing unit (CPU) 15, a field programmable gate array (FPGA) 16, a read only memory (ROM) 17, a random access memory (RAM) 18, a serial interface circuit (IF) 19, and a data IF 20. The CPU is an abbreviation for "Central Processing Unit". The FPGA is an abbreviation for "Field-Programmable Gate Array". ROM is an abbreviation of "Read Only Memory". RAM is an abbreviation for "Random Access Memory". IF is an abbreviation for "interface".

The above-described imaging unit 102 is connected to the analysis unit 103 via the data bus line 10 and the serial bus line 11. The CPU 15 executes and controls the entire operation of the analysis unit 103, image processing, and image recognition processing. The image sensors 6A and 6B of the first camera unit 1A and the second camera unit 1B form captured images and generate luminance image data. The analysis unit 103 writes the luminance image data in the RAM 18 via the data bus line 10. The control data for changing the exposure value of a sensor from the CPU 15 or the FPGA 16, the control data for changing the image reading parameter, various kinds of setting data, or the like are transmitted and received through the serial bus line 11.

The FPGA 16 performs processing that requires real-time processing on the image data stored in the RAM 18. The FPGA 16 uses the luminance image data of the images captured by the first camera unit 1A and the second camera unit 1B as a reference image and a comparison image, respectively. The FPGA 16 calculates the amount of positional deviation (difference) in an image portion between the reference image and the comparison image, the image portion corresponding to the common position within a captured area, as a disparity value (disparity image data) of the image portion corresponding to the common position.

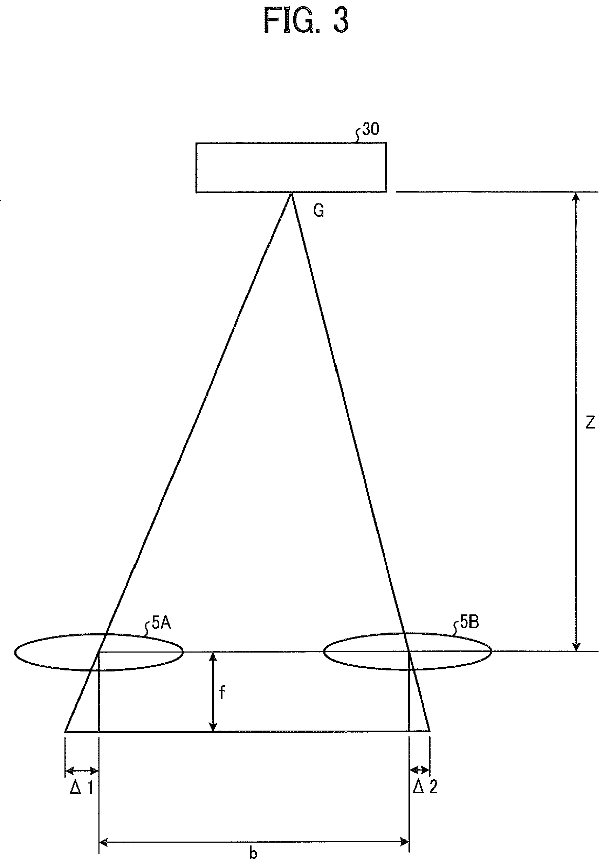

FIG. 3 is an illustration of the relative positions of a subject 30, the imaging lens 5A of the first camera unit 1A, and the imaging lens 5B of the second camera unit 1B on an XZ plane. In FIG. 3, the distance b between the imaging lens 5A and the imaging lens 5B and the focal length f of each of the imaging lens 5A and the imaging lens 5B are fixed values. Further, $\Delta 1$ refers to the amount of shift in the x coordinate of the imaging lens 5A with respect to a focus point G of the subject 30. Further, $\Delta 2$ refers to the amount of shift in the x coordinate of the imaging lens 5B relative to the focus point G of the subject 30. In this case, the FPGA 16 calculates the disparity value d, which is the difference in amount of shift in the x coordinate between the imaging lens 5A and the imaging lens 5B with respect to the focus point G of the subject 30, using the following equation 1.

[Equation 1]

$$\text{Disparity d} = |\Delta 1 - \Delta 2| \qquad (1).$$

The FPGA 16 of the analysis unit 103 performs processing that requires real-time processing such as gamma correction processing and distortion correction processing (parallelization of left and right captured images), on the luminance image data transmitted from the imaging unit 102. Using the luminance image data applied with the processing that requires real-time processing of the FPGA 16, the FPGA 16 generates disparity image data by the calculation of the above-described equation 1, and writes the generated disparity image data in the RAM 18.

Returning to FIG. 2, the explanation will be continued. The CPU 15 controls the operations of the sensor controller 7A and 7B of the imaging unit 102 and the entire operation of the analysis unit 103. Further, the ROM 17 stores a three-dimensional object recognition program for executing, for example, situation recognition, prediction, and three-dimensional object recognition therein which will be described later. The three-dimensional object recognition program is an example of an image processing program. The CPU 15 acquires, for example, controller area network (CAN) data (vehicle speed, acceleration, steering angle, yaw rate, etc.) of the own vehicle via the data IF 20 as a parameter. The CPU 15 further executes and controls various processing, such as the situation recognition processing, using the luminance image and disparity image stored in the RAM 18 according to the three-dimensional object recognition program stored in the ROM 17, thus to detect (recognize) a recognition target such as a preceding vehicle. CAN is an abbreviation for "controller area network".

The analysis unit 103 transmits the recognition data to be recognized to the control unit 104 via the serial IF 19. The control unit 104 performs running support such as brake control of the own vehicle and speed control of the own vehicle, using recognition data of a recognition target.

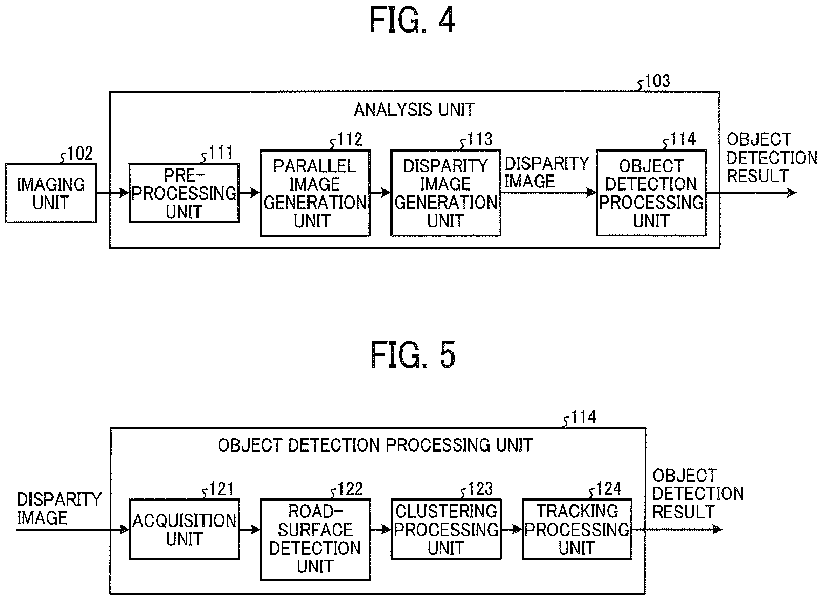

FIG. 4 is a block diagram for schematically describing the functions of the analysis unit 103. The analysis unit 103 includes a preprocessing unit 111, a parallel image generation unit 112, a disparity image generation unit 113, and an object detection processing unit 114. The imaging unit 102 transmits stereo images captured by the imaging unit 102 constituting the stereo camera to the analysis unit 103. For example, when the first camera unit 1A and the second camera unit 1B are of color specification, each of the first camera unit 1A and the second camera unit 1B generates a luminance (y) signal from red, green, and blue (RGB) signals by calculating equation 2 below, thus performing color luminance conversion processing. Each of the first camera unit 1A and the second camera unit 1B transmits the luminance image data (captured images) generated by the color luminance conversion processing to the preprocessing unit 111 of the analysis unit 103. That is, a set of the luminance image data (a captured image) obtained by the first camera unit 1A and the luminance image data (a captured image) obtained by the second camera unit IB constitute a stereo image. In the present embodiment, the preprocessing unit 111 is implemented by the FPGA 16.
[Equation 2]

$$y = 0.3R + 0.59G + 0.11B \quad (2).$$

The preprocessing unit 111 performs preprocessing of the luminance image data received from the first camera unit 1A and the second camera unit IB. In the present embodiment, the preprocessing unit 111 performs the gamma correction processing as preprocessing. Then, the preprocessing unit 111 transmits the preprocessed luminance image data to the parallel image generation unit 112.
The parallel image generation unit 112 performs parallelization processing (distortion correction processing) on the luminance image data transmitted from the preprocessing unit 111. This parallelization processing is a process for converting the luminance image data output from the first camera unit 1A and the second camera unit 1B into an ideal parallelized stereo image obtained when two pinhole cameras are mounted in parallel. More specifically, using the distortion amount of each pixel calculated by a polynomial expression of $\Delta x = f(x, y)$ and $\Delta y = g(x, y)$, the parallel image generation unit 112 renders the pixels of the luminance image data, which has been output from the first camera unit 1A and the second camera unit 1B, subjected to the conversion. The polynomial expression is based, for example, on a fifth order polynomial with respect to x (horizontal position of the image) and y (vertical position of the image). Such a parallelization processing can obtain the luminance images in which the distortion of optical systems of the first camera unit 1A and the second camera unit 1B are corrected. In the present embodiment, the parallel image generation unit 112 is implemented by the FPGA 16.
The disparity image generation unit 113 generates a disparity image having a disparity value for each pixel, which is an example of a distance image having distance information for each pixel, from the stereo image captured by the imaging unit 102. In the present embodiment, the disparity image generation unit 113 calculates the above-described expression 1 to generate disparity image data representing disparity between the reference image data and the comparison image data, using the luminance image data of the first camera unit 1A and the luminance image data of the second camera unit 1B as the reference image data and the comparison image data, respectively. More specifically, the disparity image generation unit 113 defines a block that is composed of a plurality of pixels (for example, sixteen pixels × one pixel) around a single target pixel in a certain row of the reference image data. In the same "row" of the comparison image data, a block having the same size as the block defined in the reference image data is shifted pixel by pixel in a lateral-line direction (i.e., X direction). The disparity image generation unit 113 calculates a correlation value that indicates the correlation between the characteristic amount of the pixel values of the block defined in the reference image data and the characteristic amount of the pixel values of each block of the comparison image data. In the present embodiment, the disparity image refers to information in which vertical-directional positions, horizontal-directional positions, and depth-directional positions (disparity) are associated with each other.
The disparity image generation unit 113 performs a matching process to select the block of the comparison image data having the highest correlation with the block of the reference image data among the blocks in the comparison image data on the basis of the calculated correlation value. Thereafter, the positional deviation amount between the target pixel of the block of the reference image data and the corresponding pixel of the block of the comparison image data selected by the matching process is calculated as the disparity value d. By performing such a process of calculating the disparity value d on the entire area of the reference image data or on a specific area, the disparity image generation unit 113 obtains the disparity image data. As a method of generating a disparity image, various techniques can be used. In short, the disparity image generation unit 113 calculates (generates) a distance image (disparity image in this example) having distance information for each pixel from the stereo images captured by the stereo camera.

For example, the value (luminance value) of each pixel in the block can be used as the characteristic amount of the block used for matching processing. Further, for example, as the correlation value, the sum of absolute values of differences between the values (luminance values) of the pixels in the block of the reference image data and the values (luminance values) of the pixels in the block of the comparison image data corresponding to these pixels can be used. In this case, the block with the smallest total sum is detected as the block with the highest correlation.

As the matching processing of the disparity image generation unit 113 as described above, methods such as sum of squared difference (SSD), zero-means sum of squared difference (ZSSD), sum of absolute difference (SAD), or zero-mean sum of absolute difference (ZSAD) is used. In the matching processing, when a disparity value of a subpixel level less than one pixel is required, an estimated value is used. As an estimation method of the estimated value, for example, an equiangular straight line method or a quadratic curve method or the like can be used. However, an error occurs in the disparity value of the estimated subpixel level. Therefore, a method such as an estimated error correction (EEC) that reduces the estimation error may be used.

In the present embodiment, the disparity image generation unit 113 is implemented by the FPGA 16. The disparity image generated by the disparity image generation unit 113 is supplied to the object detection processing unit 114. In this example, the function of the object detection processing unit 114 is implemented by the CPU 15 executing the three-dimensional object recognition program.

FIG. 5 is a block diagram of an example of the functions of the object detection processing unit 114. As illustrated in FIG. 5, the object detection processing unit 114 includes an acquisition unit 121, a road surface detection processing unit 122, a clustering processing unit 123, and a tracking processing unit 124. The acquisition unit 121 estimates (detects) the disparity image generated by the disparity image generation unit 113. The acquisition unit 121 functions to acquire a distance image (in this example, a disparity image) having distance information for each pixel, which is calculated from a stereo image captured by the stereo camera (the imaging unit 120). The disparity image acquired by the acquisition unit 121 is input to the road surface detection processing unit 122 and the clustering processing unit 123.

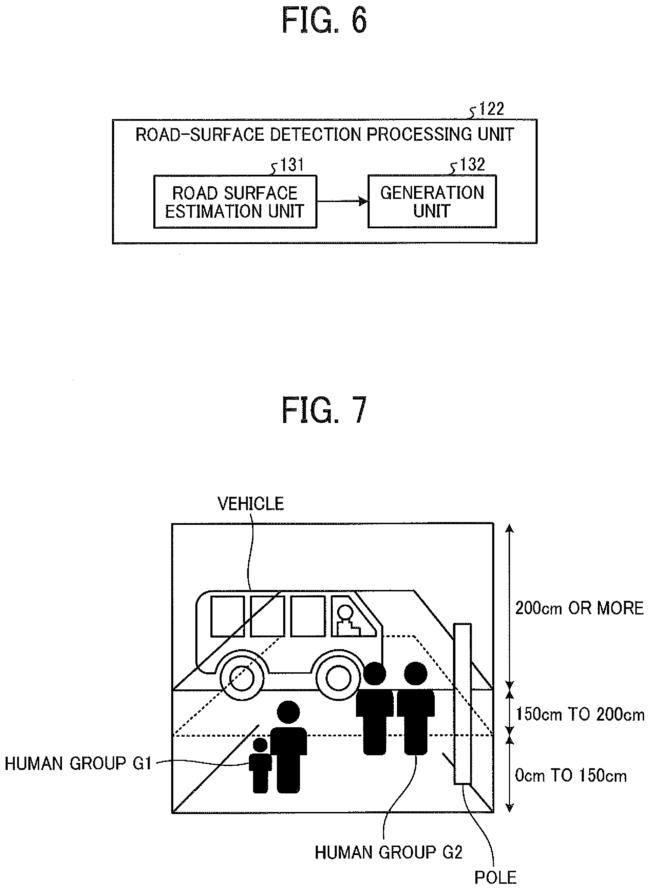

As illustrated in FIG. 6, the road surface detection processing unit 122 includes a road surface estimation unit 131 and a generation unit 132. Using the disparity image, the road surface estimation unit 131 generates corresponding data in which the vertical positions indicating the vertical direction (the vertical-direction perpendicular to the optical axis of the stereo camera) of the image and the depth-directional positions indicating the direction of the optical axis of the stereo camera are associated with each other. In this example, the road surface estimation unit 131 sets each pixel (disparity value) of the disparity image in a map (hereinafter referred to as "V-disparity map (V map)) in which the vertical coordinate (y) of the image is the vertical axis and the disparity value d is the horizontal axis, and selects sample points in a predetermined manner from the set disparity points, linearly approximating (or performing curve approximation) the selected group of points to estimate the road surface shape. As a method of estimating the road surface, various techniques can be used. The V map is a two-dimensional histogram in which the x-axis is the disparity value d, the y-axis is the y-coordinate value, and the z-axis is the frequency among the set of the disparity image (x coordinate value, y coordinate value, disparity value d). In other words, the above-described corresponding data (the V map in this example) is data in which a frequency value of disparity is recorded for each set of the vertical-directional position and the disparity value d (which corresponds to the depth-directional position). The estimation result (road surface estimation information (data)) of the road surface estimation unit 131 is input to the generation unit 132 and the clustering processing unit 123.

Using the disparity image, the generation unit 132 generates first corresponding data in which the positions in the horizontal direction indicating the direction perpendicular to the optical axes of the stereo camera and the positions in the depth direction indicating the direction of the optical axis of the stereo camera are associated with each other. At this time, the first correspondence data is preferably generated based on a plurality of pixels corresponding to a range higher than the height of a road surface (an example of a reference object as a reference of the height of the object) in the disparity image, which successfully removes noise. In this example, the first correspondence data is a two-dimensional histogram in which the horizontal axis is the actual distance in the horizontal direction, the vertical axis is the disparity value d of the disparity image, and the axis in the depth direction is frequency. In other words, the first correspondence data is data in which the frequency value of disparity is recorded for each set of the actual distance and the disparity value d.

In this case, with the formula that expresses the road surface, which is obtained by the road estimation of the road surface estimation unit 131, the y-coordinate is defined as y0 where the disparity value d is 0. In this case, the y-coordinate of y0 denotes the height of the road surface. For example, when the disparity value is d and the y coordinate is ya, ya - y0 denotes the height from the surface road where the disparity value is d. The height H from the road surface of the above-mentioned coordinate (d, ya) is obtained from the equation of H = {z * (ya - y0)}/f. In this equation, "z" denotes the distance (z = BF/ (d - offset) obtained from the disparity value dp, and "f"is the focal length of the imaging unit 102 expressed by the same unit as (ya - y0). In this case, "BF" is a value obtained by multiplying the reference length B of the imaging unit 102 by the focal length f, and "offset" is the disparity when an object at infinity is photographed.

The generation unit 132 generates at least one of a "high U map", a "standard U map", and a "small U map" as the first correspondence data. The following describes these maps. Initially, a description is given of the "High U map". When x is the position in the horizontal direction of the disparity image, y is the position in the vertical direction, and d is the disparity value set for each pixel in a disparity image, the generation unit 132 sets positions (x, y, d) corresponding to a second range that is the range of height of greater than or equal to a predetermined value within a first range of height of higher than the road surface, based on the values of x and d, thereby generating a two dimensional histogram in which the horizontal axis represents the horizontal-directional position x of the disparity image, the vertical axis represents the disparity d, and the depth-directional axis represents frequency. Subsequently, the generation unit 132 converts the values of the horizontal axis of the two-dimensional histogram into actual distance, thus generating a high U map.

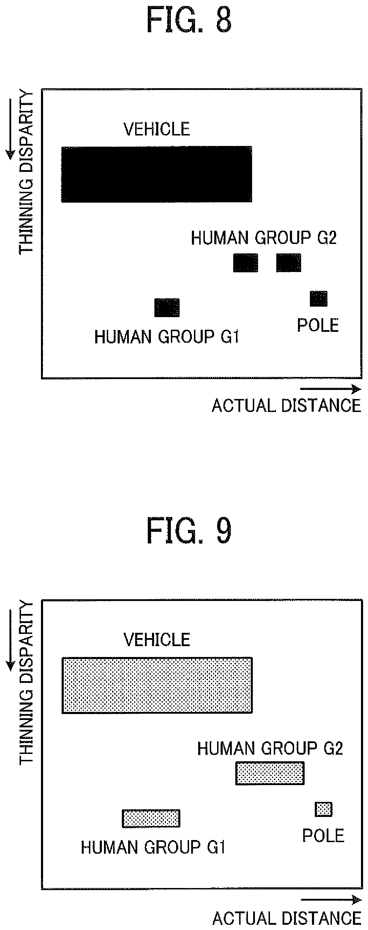

In the captured image illustrated in FIG. 7 for example, a group 1 including an adult and a child, a group 2 including two adults, a pole, and a vehicle are displayed. In this example, the second range ranges from 150 centimeter (cm) to 200 cm in actual height from the road surface. FIG. 8 is an illustration of a high U map in which the disparity values d within the second range are set. In the high U map of FIG. 8, the disparity value d of the child having a height of shorter than 150 cm is not displayed. Note that, the disparity d of the vertical axis is a thinned disparity value in which the disparity value d is thinned using the thinning rate according to distance. The high U map generated by the generation unit 132 is input to the clustering processing unit 123.

Next, a description is given of a standard U map. When x is the position in the horizontal direction of the disparity image, y is the position in the vertical direction, and d is the disparity value set for each pixel in a disparity image, the generation unit 132 sets positions (x, y, d) corresponding to the first range of the disparity image, based on the values of x and d, thereby generating a two dimensional histogram in which the horizontal axis represents the horizontal-directional position x of the disparity image, the vertical axis represents the disparity d, and the depth-directional axis represents frequency. Subsequently, the generation unit 132 converts the values of the horizontal axis of the two-dimensional histogram into actual distance, thus generating a standard U map. In the example of FIG. 7, the range that ranges from 0 cm to 200 cm (including the above-mentioned second range) is set as the first range. FIG. 9 is an illustration of the standard U map in which the disparity values d within the first range are set. In addition to the standard U map, the generation unit 132 further generates height data (data regarding height) in which heights are recorded for corresponding disparity points each of which is a combination of the actual distance and the disparity value d in the standard U map. The above-described recorded heights are for the respective disparity points each having a height (h) highest from the road surface. In other words, the height data is data in which the height is recorded for each combination (set) of the actual distance and the disparity value d. In the following description, such height data is referred to as a "height map of the standard U map". The position of each pixel included in the height map of the standard U map corresponds to the position of each pixel included in the standard U map. The standard U map and the height map of the standard U map generated by the generation unit 132 are input to the clustering processing unit 123. In this processing, the generation unit 132 generates an overview map (bird's-eye image and an overview image) to facilitate detecting an object. Accordingly, in some embodiments, the horizontal axis of the generated map represents any corresponding to the actual distance, instead of the actual distance.

Next, a description is given of a "small U map". When x is the position in the horizontal direction of the disparity image, y is the position in the vertical direction, and d is the disparity value set for each pixel in a disparity image, the generation unit 132 sets positions (x, y, d) (fewer than those in generating the standard U map) corresponding to the first range of the disparity image, based on the values of x and d, thereby generating a two dimensional histogram in which the horizontal axis represents the horizontal-directional position x of the disparity image, the vertical axis represents the disparity d, and the depth-directional axis represents frequency. Subsequently, the generation unit 132 converts the values of the horizontal axis of the two-dimensional histogram into actual distance, thus generating a small U map. The small U map has a lower distance resolution for one pixel than that of the standard U map. In addition to the small U map, the generation unit 132 further generates height data (data regarding height) in which heights are recorded for corresponding disparity points each of which is a combination of the actual distance and the disparity value d in the small U map. The above-described recorded heights are for the respective disparity points each having a height (h) highest from the road surface. In other words, the height data is data in which the height is recorded for each combination (set) of the actual distance and the disparity value d. In the following description, such height data is referred to as a "height map of the small U map". The position of each pixel included in the height map of the small U map corresponds to the position of each pixel included in the small U map. The small U map and the height map of the small U map generated by the generation unit 132 are input to the clustering processing unit 123.

In this example, cases where the generation unit 132 generates a standard U map and the generated standard U map is input to the clustering processing unit 123 are described. How. Alternatively, the generation unit 132 generates a high U map, a standard U map, and a small U map, and these maps are input to the clustering processing unit 123, to detect an object using, for example, the high U map, the standard U map, and the small U map.

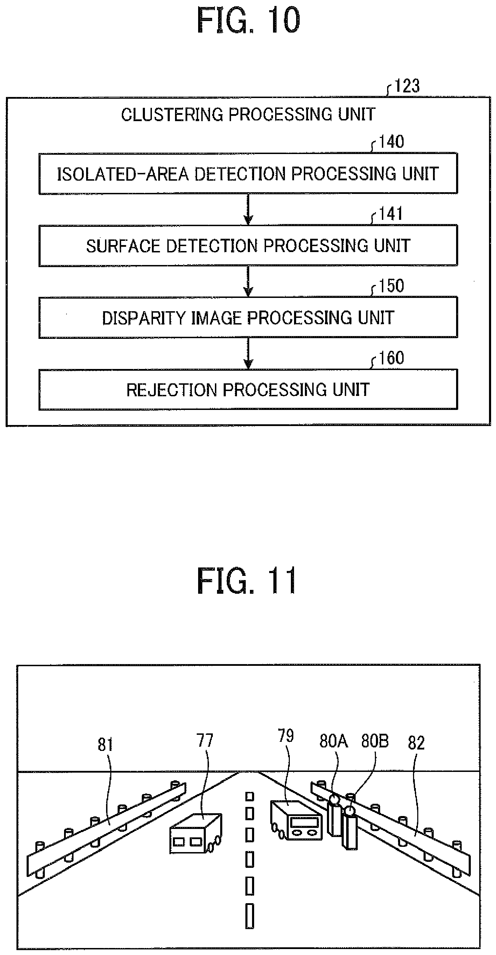

Returning to FIG. 5, a description of the clustering processing unit 123 is given. The clustering processing unit 123 detects a position of an object in the disparity image acquired by the acquisition unit 121, using various types of data obtained from the road surface detection processing unit 122. FIG. 10 is a block diagram of an example of functions of the clustering processing unit 123. As illustrated in FIG. 10, the clustering processing unit 123 includes an isolated-area detection processing unit 140, a surface detection processing unit 141, a disparity image processing unit 150, and a rejection processing unit 160.

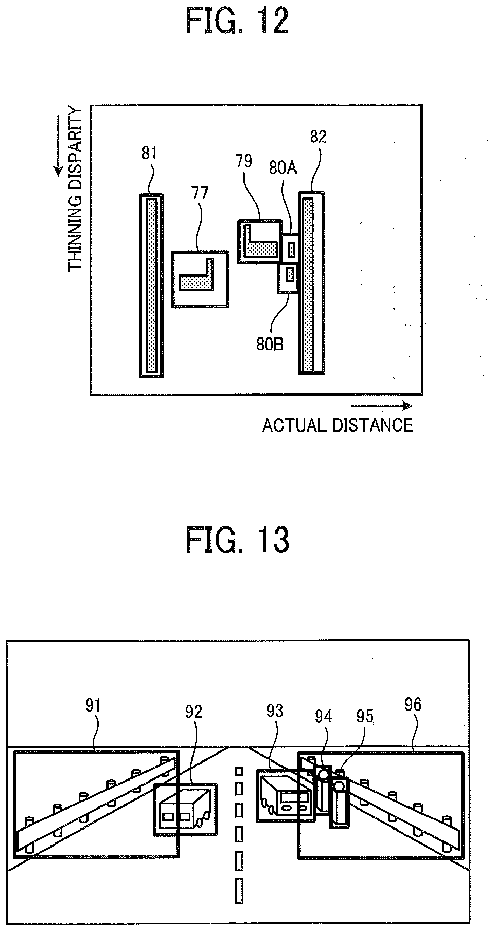

The isolated-area detection processing unit 140, which is an example of a detection unit, detects an isolated area (an aggregation area) that is an area of a set of disparity values d, from the first corresponding data (the standard U map in this example). In the following description, this detection processing will be referred to as an "isolated-area detection processing". In the captured image as illustrated in FIG. 11 for example, guardrails 81 and 82 are disposed on the left and right sides, and a vehicle 77 and another vehicle 79 are running in directions opposed to each other on opposite sides across the center line. In each driving lane, the vehicle 77 or the vehicle 79 is running. Between the vehicle 79 and the guard rail 82, two poles 80A and 80B are present. FIG. 12 is an illustration of a standard U map obtained based on the captured image of FIG. 11. The boxed areas correspond to isolated areas.

The surface detection processing unit 141 calculates surface data from the outline of the isolated area (aggregation area) detected by the isolated-area detection processing unit 140, and converts the detection result into a three-dimensional structure as information (data). When determining that the isolated area detected by the isolated-area detection processing unit 140 has a plurality of side surfaces in the common direction, the surface detection processing unit 141 performs a separation process on the isolated area. In the following description, the processing by the surface detection processing unit 141 is referred to as "surface detection processing". A detailed description is given later.

The disparity image processing unit 150 performs a disparity image process for detecting object data in an area on the disparity image or actual space corresponding to the isolated area (group area) detected by the isolated-area detection processing unit 140. FIG. 13 is an illustration of an area on the disparity image corresponding to the isolated area of FIG. 12 (the result of the process of the disparity image processing unit 150). The area 91 of FIG. 13 is an area corresponding to the guard rail 81, and the area 92 is an area corresponding to the vehicle 79. The area 94 is an area corresponding to the pole 80A, and the area 96 is an area corresponding to the guard rail 82.

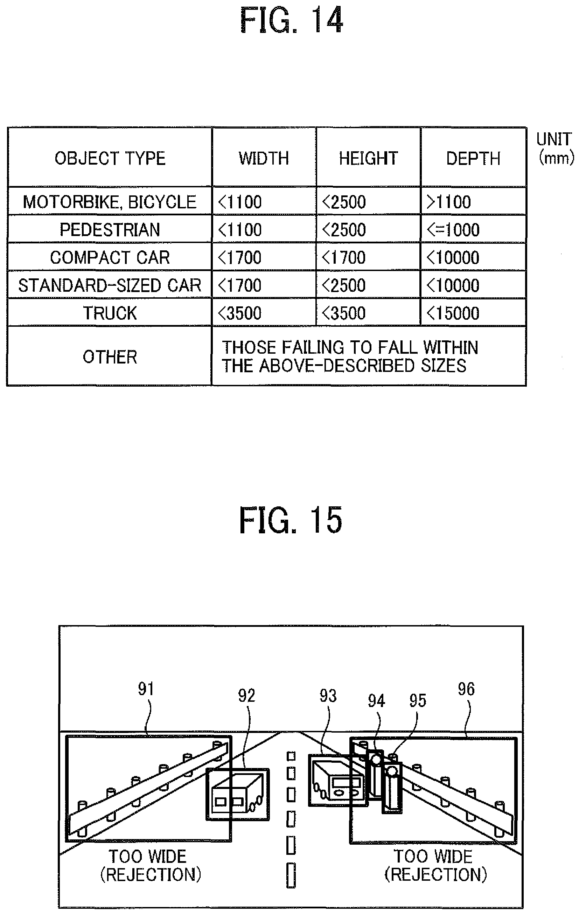

The rejection processing unit 160 performs a rejection process for selecting an object to be output based on object data in the area on the disparity image or the actual space detected by the disparity image processing unit 150. The rejection processing unit 160 executes size rejection with respect to the size of the object and overlap rejection with respect to the relative positions between the objects. In size rejection for example, the rejection processing unit 160 rejects the detection result of a size that does not fall within the size range defined for each object type illustrated in FIG. 14. In the example of FIG. 15 for example, the rejection processing unit 160 rejects the areas 91 and 96. In the overlap rejection, the rejection processing unit 160 rejects the result of overlapping areas that correspond to isolated areas on the disparity image (detection results on the real U map) detected by the disparity image processing.

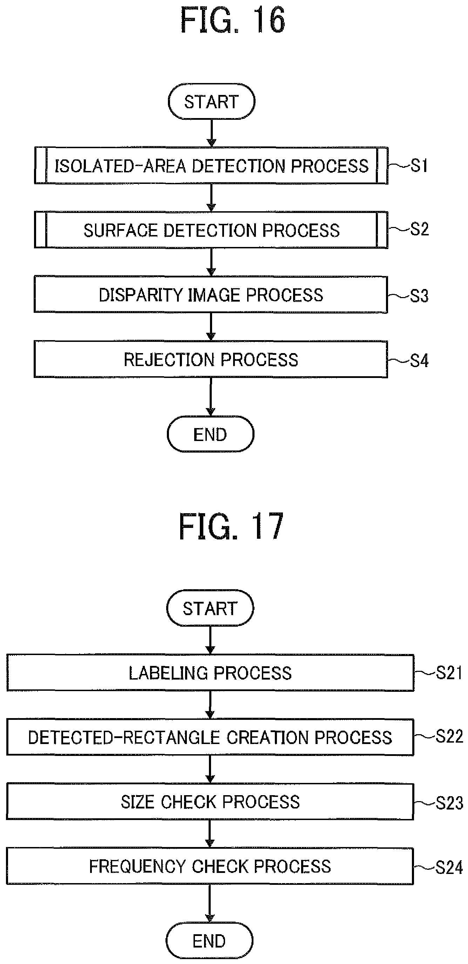

FIG. 16 is a flowchart of an example of the processing of the clustering processing unit 123. In this example, a height map of a standard U map, a disparity image, and road surface estimation data are input as input data, and a detection result on a disparity image is output as output data. First, the isolated-area detection processing unit 140 of the clustering processing unit 123 performs an isolated area detection process (step S1). Next, the surface detection processing unit 141 of the clustering processing unit 123 performs a surface detection process (step S2). The disparity image processing unit 150 of the clustering processing unit 123 performs a disparity image process (step S3). Then, the rejection processing unit 160 of the clustering processing unit 123 performs a rejection process using the result of the disparity image process in step S3 (step S4) and outputs the detection result on the final disparity image as output data. Note that, in some embodiments, the clustering processing unit 123 performs the surface detection process in step S2 between the disparity image process in step S3 and the rejection process in step S4.

The output data (detection result) from the clustering processing unit 123 is input to the tracking processing unit 124 in FIG. 5. The tracking processing unit 124 determines the detected object is a tracking target when the detection result (detected object) appears over multiple sequential frames. The tracking processing unit 123 subsequently outputs the detection result determined to be a tracking target to the control unit 104, as the object detection result.

The following specifically describes the isolated-area detection process. FIG. 17 is a flowchart of an example of the isolated- area detection process. In this example, the standard U map is input to the clustering processing unit 123, as input data. A description is given late of the output data. First, the isolated-area detection processing unit 140 of the clustering processing unit 123 performs a labeling process by grouping a set of disparities within the standard U map and giving an identification (ID) to the grouped set of disparity (step S21). More specifically, the isolated-area detection processing unit 140 focuses on a set of a plurality of pixels included in the standard U map. Among the pixel focused (hereinafter, referred to as a pixel of interest) and eight pixels in the vicinity of the pixel of interest (the eight pixels correspond to pixels on the right, upper right, upper side, upper left, left, lower left, lower side, and lower right of the pixel of interest, respectively), the isolated-area detection processing unit 140 sets a pixel value of "1" for a pixel having a frequency value and a pixel value of "0" for a pixel having no frequency value, thus rendering the pixels binarized. Note that the binarization method is not limited to this but is arbitrary. For example, among the eight pixels in the vicinity of the pixel of interest, the isolated-area detection processing unit 140 sets the pixel value of "1" for a pixel having a frequency value of disparity greater than or equal to a threshold value and the pixel value of "0" for the other pixels. Subsequently, the isolated-area detection processing unit 140 regards a closed area composed of the aggregation of the pixel values of "1" as a set of disparities (one group or a group area of pixels), and assigns an ID to each pixel included in the closed area. The ID is set to a value that makes each group identifiable.

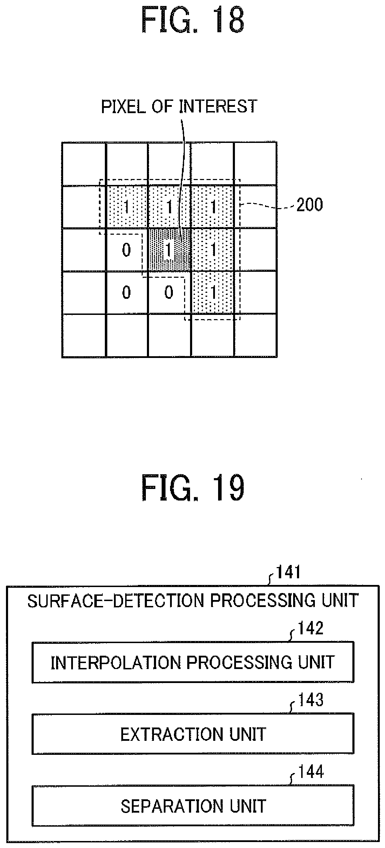

FIG. 18 is an illustration of an example after binarization processing in which five pixels included in an area 200 are assigned with the common ID.

Returning to FIG. 17, a description of the isolated- area detection process is given. After step S21, the isolated-area detection processing unit 140 performs a detected-rectangle creation process (step S22). Specifically, the isolated-area detection processing unit 140 calculates a rectangle circumscribing an aggregation area of pixels to which the common ID is assigned, and detects the calculated rectangle circumscribing the cluster area of pixels as a detected rectangle. The detected rectangle refers to information (data) representing the position and size of the rectangle, for example, the coordinates of the corners of the rectangle, the height and the width. Next, the isolated-area detection processing unit 140 performs a size check process for checking the size of the detected rectangle created in step S22 (step S23). For example, when the size of the detected rectangle created in step S22 is smaller than or equal to a prescribed threshold as a size corresponding to noise, the isolated-area detection processing unit 140 performs a process for discarding the detection rectangle. Subsequently, the isolated-area detection processing unit 140 performs a frequency check process for checking the frequency value (frequency value of disparity) of each pixel included in the detected rectangle created in step S22 (step S24). For example, when the accumulated value of the frequency values (the frequency values of the disparity) included in the detected rectangle created in step S22 is less than or equal to a desired threshold as the number necessary for representing the object, the isolated-area detection processing unit 140 discards the detected rectangle.

Though the above-described isolated-area detection process, data representing a detected rectangle is output to the surface detection processing unit 141, as output data. In this case, an ID for identifying a group is assigned to each pixel included in a detected rectangle on the standard U map. That is, the output data is data representing an ID map (referred to as an ID map of the standard U map or simply as an ID map unless distinguished from others) in which pixels are categorized into groups on the standard U map.

Next, a description is given of the surface detection process. As illustrated in FIG. 19, the surface detection processing unit 141 includes an interpolation processing unit 142, an extraction unit 143, and a separation unit 144. The detection result of the isolated-area detection processing unit 140 is output to the surface detection processing unit 141, and the surface detection processing unit 141 performs the surface detection process using the detection result of the isolated-area detection processing unit 140.

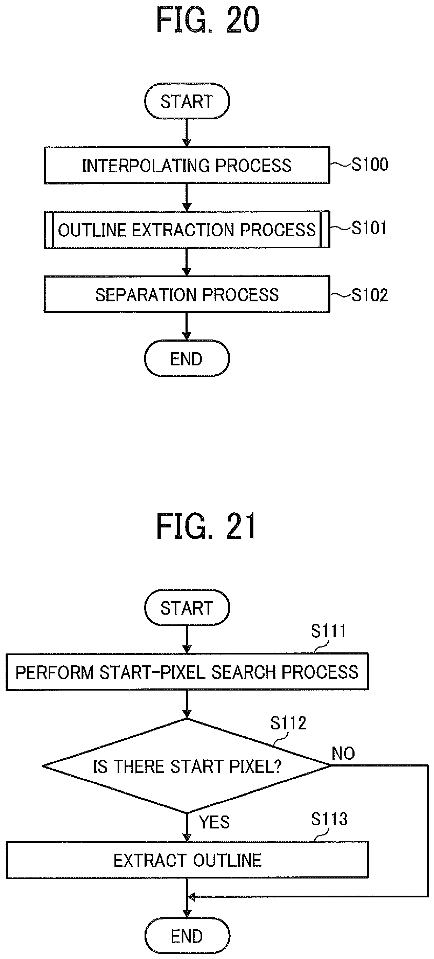

FIG. 20 is a flowchart of the surface detection process of the surface detection processing unit 141. In the present embodiment, the surface detection processing unit 141 performs the surface detection process for each detection result (each detected rectangle on the standard U map) of the isolated-area detection process illustrated in FIG. 20. Firstly, the interpolation processing unit 142 of the surface detection processing unit 141 performs an interpolating process (step S100). Next, the extraction unit 143 of the surface detection processing unit 141 performs an outline extraction process (step S101). The separation unit 144 of the surface detection processing unit 141 performs a separation process (step S102). A description is given of each step later.

The interpolation processing unit 142 of FIG. 19 performs the interpolation process on the detection result of the isolated-area detection processing unit 140 to smooth noise. An ID is newly assigned to the pixel added by the interpolation process.

The extraction unit 143 of FIG. 19 extracts the outline of the aggregation area. In the present embodiment, the extraction unit 143 of the surface detection processing unit 141 sets direction data that represents a connecting direction for each of a plurality of pixels constituting the outline of the aggregation area. The following more specifically describes the outline extraction process of the extraction unit 143. FIG. 21 is a flowchart of an example of the outline extraction process of the extraction unit 143. The following describes the flowchart in FIG. 21.

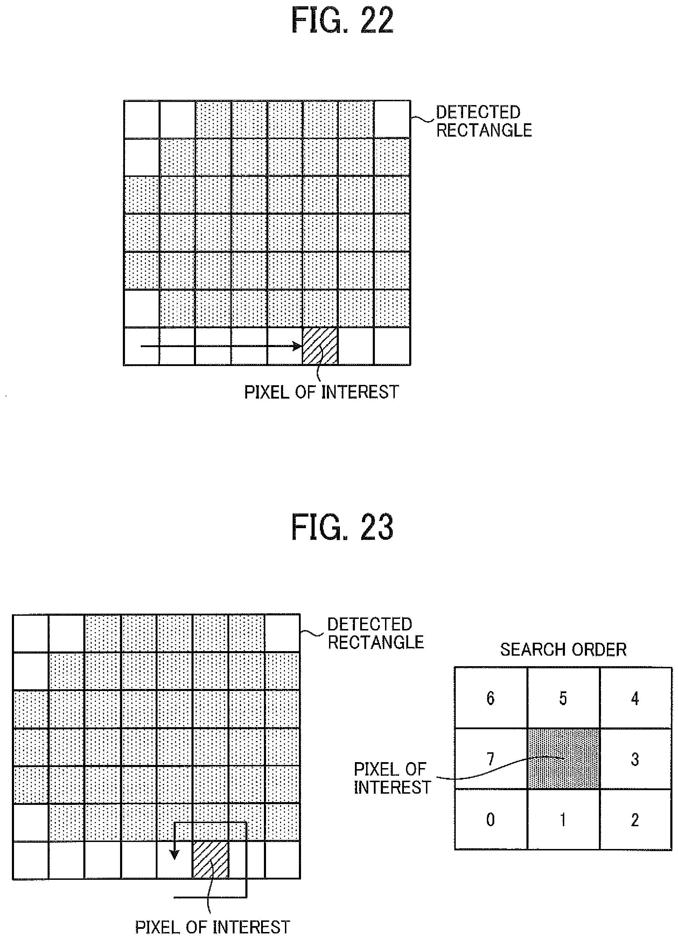

As illustrated in FIG.21, the extraction unit 143 performs a start-pixel search process to search for a start pixel (step S111). More specifically, as illustrated in FIG. 22, the extraction unit 143 searches for a pixel having an ID in a direction from the lower left to the upper right of the detected rectangle, and determines a first detected pixel as a pixel of interest.

Returning to FIG. 21, a description of the start-pixel search process is further given. When the extraction unit 143 detects a start pixel (Yes in step S112), the extraction unit 143 performs an outline extraction process (step S113). When the extraction unit 143 fails to detect a start pixel (No in step S112), the process ends.

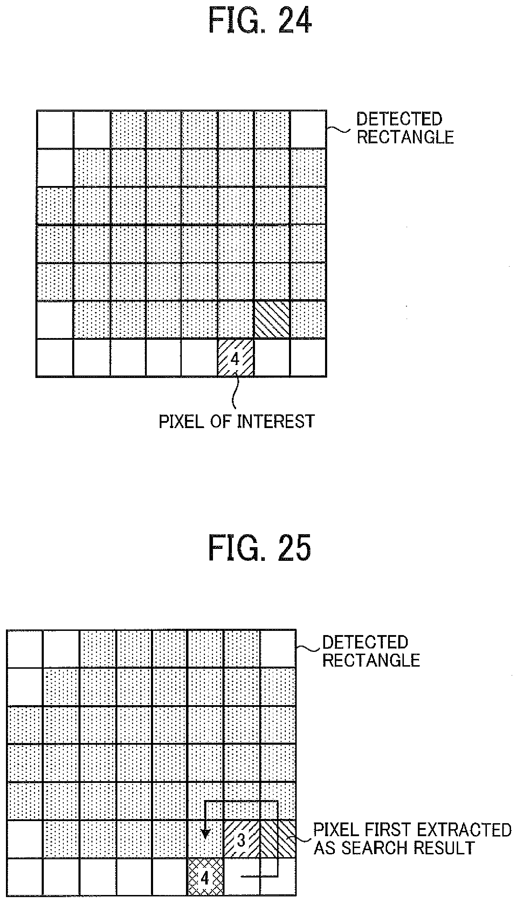

The following more specifically describes the outline extraction process in step S113 of the extraction unit 143 in FIG. 20. In this example, the extraction unit 143 searches eight pixels adjacent to the pixel of interest in the counterclockwise search order as illustrated in FIG. 23 to detect a pixel having an ID. The search order illustrated in FIG. 23 refers to an order in which a pixel adjacent to the lower left of the pixel of interest is first searched, another pixel adjacent to the bottom of the pixel of interest (disposed immediately under the pixel of interest) is secondarily searched, still another pixel adjacent to the lower right of the pixel of interest is a third pixel to be searched, yet another pixel adjacent to the right of the pixel of interest is a fourth pixel to be searched, further pixel adjacent to the upper right of the pixel of interest is a fifth pixel to be searched, still further pixel adjacent to the top of the pixel of interest is a sixth pixel to be searched, yet further pixel adjacent to the upper left of the pixel of interest is a seventh pixel to be searched, and even further pixel adjacent to the left of the pixel of interest is an eighth pixel to be searched. When a pixel having an ID is detected as the search result, the extraction unit 143 records the search order in the pixel of interest, and determines the detected pixel as a next pixel of interest, repeating the process for searching for a pixel having an ID in the search order. As illustrated in FIG. 24 for example, when a pixel adjacent to the upper right of the pixel of interest is first detected as a pixel having an ID, "4" which is the search order at that time is recorded in the pixel of interest. Then, the extraction unit 143 continues the search with the pixel adjacent to the upper right of the pixel of interest as a next pixel of interest. At this time, the search order indicating "4" recorded in the pixel of interest is data indicating the direction in which a pixel connects with a next (following) pixel to define the outline (the pixel of interest connects to another pixel in the upper right direction in this example), thus corresponding to the direction data (data regarding direction).

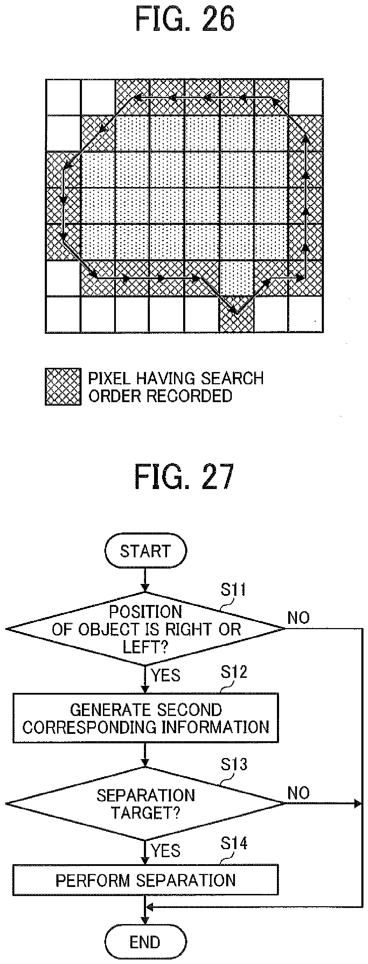

As illustrated in FIG. 25, the extraction unit 143 subsequently searches the eight pixels adjacent to the new pixel of interest in the counterclockwise search order, to detect a pixel having an ID. With respect to the processed pixel (the pixel whose search order has already been recorded), the search order is not recorded even if the pixel is searched again. In the example of FIG. 25, a pixel adjacent to the right of the current pixel of interest is detected as a target pixel having an ID, instead of the pixel adjacent to the lower left of the current pixel of interest. This is because the pixel adjacent to the lower left of the current pixel of interest (i.e., the immediately previous pixel of interest in which the search order of "4" has been recorded), has the search order recorded. Accordingly, the extraction unit 143 records "3", which is the search order at this time, in the pixel of interest, and continues the search with the pixel adjacent to the right of the pixel of interest as the next pixel of interest. As illustrated in FIG. 26, data (corresponding to the direction data) representing the search order is recorded (set) for each pixel constituting the outline of the aggregation area (a set of pixels assigned with IDs). That is, the outline of the aggregate area is obtained by connecting the pixels in which data indicating the search order are recorded. The extraction unit 143 calculates the back side position and the side position based on the characteristics of the outline extracted in the above-described manner (that is, the direction in which pixels constituting the outline of the object are arranged). For example, when the outline extraction route (search order of the pixel of interest) is in the counterclockwise direction (in the case of FIG. 23), the distance to the back side is obtained from the y-coordinate values (the coordinate value in the depth direction (the direction of the disparity value d)) in which there are the most numbers of pixels having the direction data indicating the direction from right to left (in this example, search order indicating "7") set. Further, the position of the left-side surface is obtained from the y-coordinate values in which there are the most numbers of pixels having the direction data representing the direction from up to down (in this example, the search order indicating "1") set. The position of the right-side surface is obtained from the y-coordinate values in which there are the most numbers of pixels having the direction data representing the direction from down to up (in this example, the search order indicating "5") set.

Returning to FIG. 19, a description of the surface-detection processing unit 141 is further given. The separation unit 144 separates the aggregation area based on the characteristics of the outline extracted by the extraction unit 143. More specifically, when the outline extracted by the extracting unit 143 forms a plurality of side surfaces in the common direction, the separation unit 144 separates the aggregation area. In the present embodiment, the separation unit 144 determines how a plurality of side surfaces representing the common direction is present based on the direction data set for each of the plurality of pixels constituting the outline. More specifically, the separation unit 144 searches each row of an area of interest (an area in the standard U map, i.e., first correspondence information (data)) including the aggregation area detected by the isolated-area detection processing unit 140 in the horizontal direction (the horizontal-axis (x-axis) of the standard U map) to count pixels indicating a common connecting direction. The separation unit 144 determines, as a pixel of interest, each of second-to-last counted pixels having the direction data that represents the common vertical direction (the connecting direction).

Then, the separation unit 144 generates second correspondence information (data) in which a position in the horizontal direction and the frequency value of a pixel of interest counted along the depth direction (the vertical axis (y-axis) direction of the standard U map) are associated with each other. The separation unit 144 determines whether the frequency value corresponding to a second side surface of the aggregation area exceeds a threshold value based on the second correspondence data. When the frequency value corresponding to the second side surface exceeds the threshold value, the separation unit 144 identifies the second side surface as a separation target. The separation unit 144 further determines, as a separation position, the horizontal-directional position corresponding to a position farthest from the x axis in the depth direction within the aggregation area, in a direction from the horizontal-directional position corresponding to the second side surface as the separation target to the horizontal-directional position corresponding to the first side surface of the aggregation area. Then, the separation unit 144 separates the aggregation area into two sub-aggregation areas with the determined separation position as a boundary and re-assigns IDs (different IDs) to the two aggregation areas.

The following more specifically describes the separation process of the separation unit 144. FIG. 27 is a flowchart of an example of the separation process of the separation unit 144. The separation unit 144 performs the process of FIG. 27 on each aggregation area, the outline of which has been extracted by the extraction unit 143. A description is given of the flowchart of FIG. 27.

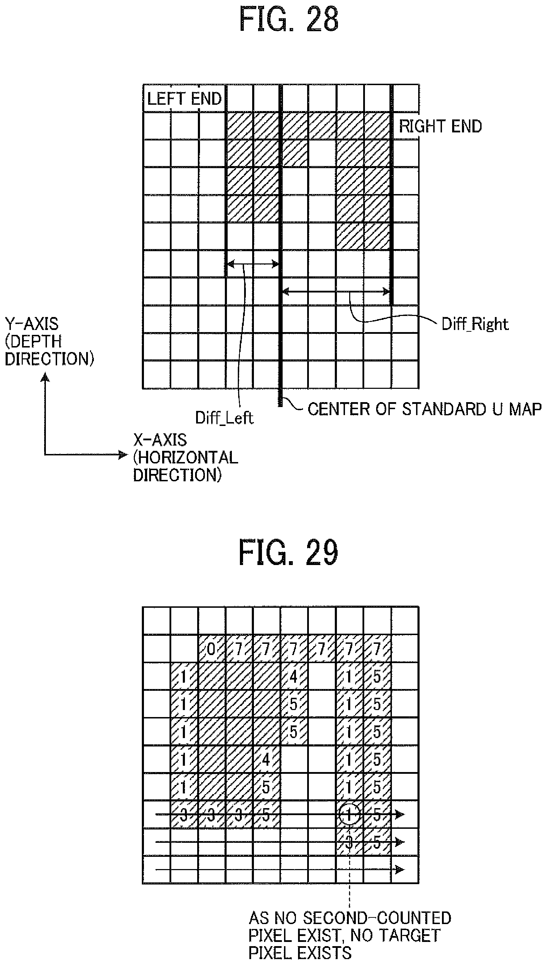

The separating unit 144 determines whether the position of the aggregation area (object) is right or left (step S11). More specifically, the separating unit 144 determines whether the aggregation area is on the left side or right side relative to the x coordinate of the center of the standard U map, based on the left-end position and the right-end position of the aggregation area. Note that, as illustrated in FIG. 28, "Diff_Left" denotes the distance from the x coordinate of the center of the standard U map to the x coordinate of the left end of the aggregation area, and "Diff Right" denotes the distance from the x coordinate of the center of the standard U map to the x coordinate of the right end of the aggregation area. Then, the separation unit 144 determines the aggregation area is positioned on the left when Diff_Left is greater than Diff_Right by a predetermined number of pixels (any number of pixels to allow determining whether the position of the aggregation area is on the left side or right side. In this example, Diff_Left is greater than Diff_Right by four pixels that correspond to 50 centimeters (cm). Further, the separation unit 144 determines the aggregation area is positioned on the right when Diff Right is larger than Diff Left by a predetermined number of pixels. When none of the above conditions is satisfied, the separation unit 144 determines that the aggregation area is positioned in the center. In this case, a negative determination is made in step S11 (No in step S11), and the process ends. On the other hand, when the separation unit 144 determines that the aggregation area is positioned on the right or left, an affirmative determination is made in step S11 (Yes in step S11), and the process proceeds to step S12.

In step S12, the separation unit 144 generates the above-described second correspondence data. In this example, the separation unit 144 searches each row of an area of interest (for example, a detected rectangle area in the standard U map) including the aggregation area so as to count pixels with respect to a vertical direction that is a connecting direction to count pixels having a common connecting direction. The separation unit 144 determines, as a pixel of interest, each of second-to-last counted pixels having the direction data that represents the common vertical direction, i.e., the connecting direction. Then, the separation unit 144 generates second correspondence data in which each position in the horizontal direction of the standard U map and the frequency value of a pixel of interest counted along the depth direction (the vertical-axis direction of the standard U map) are associated with each other. For example, when the aggregation area is positioned on the right, a starting position of the search is on the left end of the area of interest, i.e., the search direction is in the direction from the left to the right. The separation unit 144 determines, as a pixel of interest, a second (or later) counted pixel having the direction data representing the direction from up to down (in this example, the search order "1") in which the search order "1" is recorded.

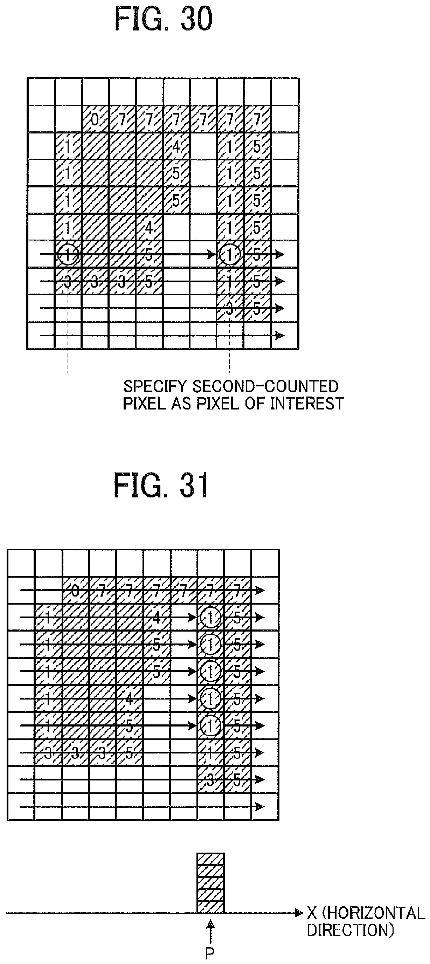

In the example as illustrated in FIG. 29, the separation unit 144 sequentially searches the rows of the area of interest, starting with the lowest row of the area of interest. In the third search, a pixel, in which the search order "1" is set, is detected (counted) for the first time, which means that the pixel having the search order "1" is counted only one time so far (the count number of pixels having the search order "1" is 1). At this time, no pixel of interest is present. As illustrated in FIG. 30 for another example, in the fourth search, the pixel having the search order "1" is counted twice (the count number of pixels having the search order "1" is 2), and accordingly a pixel of interest is present. In other words, the pixel counted as a second-counted pixel is determined as a pixel of interest. The separation unit 144 counts the pixels of interest determined as described above in the depth direction (the vertical-axis direction), for each position (horizontal-directional position) along the horizontal direction (the horizontal-axis direction of the standard U map), so as to associate each position with a frequency value that corresponds to the count number of the pixels of interest. In the example of FIG. 31, a position P in the horizontal direction is associated with the frequency value that represents the count number of 5 (the number of pixels of interest which has been counted along the depth direction). In such a manner as described above, the separation unit 144 generates the second correspondence data.

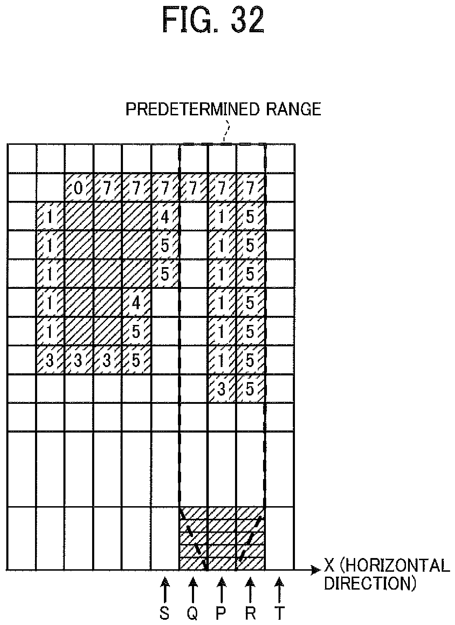

When the aggregation area has an oblique shape for example, the second correspondence data is data in which each horizontal-directional position is associated with the frequency value that is the total numbers of the pixels of interest counted along the depth direction within a predetermined range along the horizontal direction that includes the horizontal-directional position. In FIG. 32 for example, the predetermined range, which includes the position P in the horizontal direction, is a range that includes the position Q and the position R, which are adjacent to the position P side by side. The count number, by which the number of pixels of interest is counted along the depth direction within the predetermined range, is 5. Similarly, the predetermined range, which includes the position Q in the horizontal direction, is a range that includes the position S and the position P, which are adjacent to the position Q side by side. The count number that is the number of pixels of interest counted along the depth direction within the predetermined range is 5. Similarly, the predetermined range, which includes the position R in the horizontal direction, is a range that includes the position P and the position T, which are adjacent to the position R side by side. The count number that is the number of pixels of interest counted along the depth direction within the predetermined range is 5. In this case, the second correspondence data is data in which a frequency value indicating the count number "5" is associated with the position Q, a frequency value indicating the count number "5" is associated with the position P, and a frequency value indicating the count number "5" is associated with the position R.

Returning to FIG. 27, a description of the separation process is further given. After generating the second correspondence data in step S12, the separation unit 144 determines whether the aggregation area, from which the second correspondence data has been generated, is a separation target. In this example, the greatest frequency value (maximum frequency) of the second correspondence data is the length of the second side surface. The separation unit 144 determines whether the maximum frequency (length) of the second correspondence data has a sufficient length as compared to the original length in depth. In this example, the separation unit 144 determines whether the maximum frequency of the second correspondence data is greater than a first threshold value to determine whether the maximum frequency has a sufficient length as compared to the original length in depth (to determine whether the maximum frequency satisfies the first threshold value). Further, the separation unit 144 determines, based on the distance to a detected object (the distance in the depth direction), whether the maximum frequency of the second correspondence data (corresponding to the length of the second side surface) is greater than a second threshold value to determine whether the aggregation area having a side-surface-like shape is erroneously detected as the second side surface. In this case, when the first condition and the second condition are satisfied, the separation unit 144 determines that the aggregation area is to be separated (a separation target). In short, the separation unit 144 determines, based on the second correspondence data, whether the frequency value corresponding to the second side surface exceeds the threshold value. When the frequency value corresponding to the second side surface exceeds the threshold value, the separation unit 144 determines the second side surface to be a separation target. In other words, the frequency value, which exceeds the threshold value in the second correspondence data, is a frequency value corresponding to the second side surface that is a separation target.

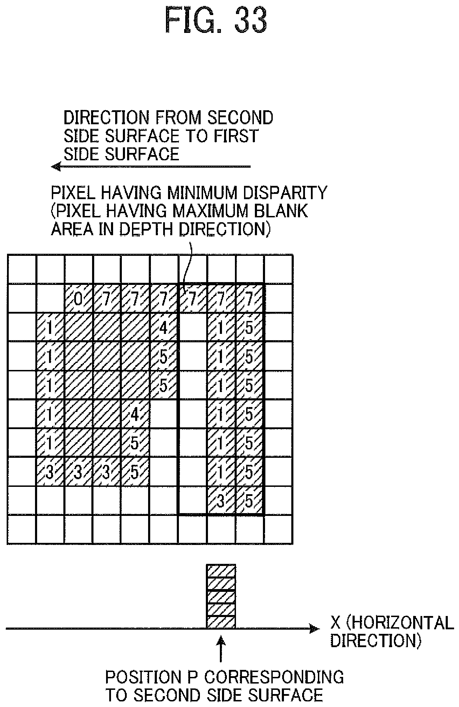

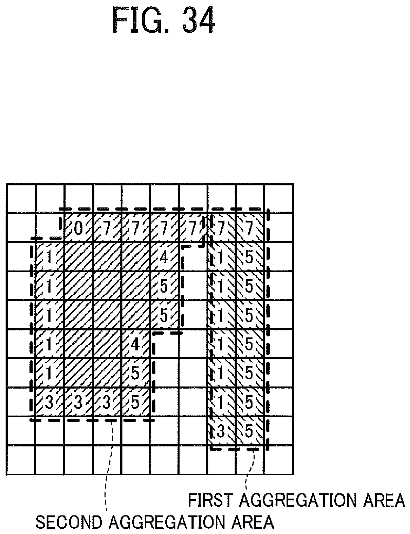

When an affirmative determination is made in step S13 (Yes in step S13), the separation unit 144 performs a separation process on the aggregation area (step S14). When a negative determination is made in step S13 (No in step S13), the process ends. The following specifically describes the separation process in step S14. The separation unit 144 determines that the position in the horizontal direction associated with the maximum frequency value in the second correspondence data is the position of the second side surface. In the case of the embodiment in FIG. 32, among the three horizontal-directional positions (P, Q, R) associated with the maximum frequency value, the pixel of interest closest to the x-axis in the depth direction (the target pixel having the largest disparity value (in this example, a pixel in which the search order indicating "1" is set)) can be determined as the position corresponding to the second side surface. The separation unit 144 identifies a pixel having a smallest disparity (pixel positioned farthest from the x axis in the depth direction within the aggregation area in the U map) in a direction from a horizontal-directional position corresponding to the second side surface to a horizontal-directional position corresponding to a first side surface. When the aggregation area is positioned on the right side, the separation unit 144 determines a horizontal-directional position of a pixel having a smallest disparity as a separation position in a direction from a position corresponding to the second side surface to the left as illustrated in FIG. 33. Thus, the separation unit 144 determines the horizontal-directional position of a pixel adjacent to a largest blank area in the depth direction. As illustrated in FIG. 34, the separation unit 144 separates one aggregation area into two aggregation areas (in the example of FIG. 34, the first aggregation area and the second aggregation area) with respect to the boundary at separation position specified as described above.

As described above, in the present embodiment, the separation unit 144 separates an aggregation area extracted by the extraction unit 143 based on the characteristics of the outline of the aggregation area. More specifically, the separation unit 144 separates the aggregation area extracted by the extraction unit 143 into a plurality of a sub-aggregation areas when the outline of the aggregation area forms a plurality of surfaces in a common direction. Such a process is performed to determine an erroneous detection due to the cluster of a plurality of objects when a plurality of surfaces in the common direction is present. This is because a single object does not have a plurality of surfaces in the common direction that encloses the object. Thus, when a plurality of surfaces in the common direction is present, an erroneous detection occurs. Such a configuration prevents erroneous detection of a cluster of a plurality of objects as one object. Hence, the configuration according to at least one embodiment of the present disclosure increases the detection accuracy of an object.

The present disclosure is not limited to the details of the exemplary embodiments described above and various variations and improvements are possible. Further, various embodiments are implemented by appropriately combining a plurality of constituent elements disclosed in the above embodiment. For example, some constituent elements may be deleted from all the constituent elements described in the above-described embodiment.

The program executed by the device control system 100 according to the above-described embodiment and variation may be installed for distribution in any desired computer-readable recording medium such as a compact disc, a read-only memory (CD-ROM), a flexible disk (FD), a compact disc-recordable (CD-R), and a digital versatile disk (DVD), a universal serial bus (USB) in a file format installable or executable by a computer, or may be provided or distributed via network such as Internet. Additionally, various program may be implemented in, for example, a read only memory (ROM) to be provided.

The present invention can be implemented in any convenient form, for example using dedicated hardware, or a mixture of dedicated hardware and software. The present invention may be implemented as computer software implemented by one or more networked processing apparatuses. The processing apparatuses can compromise any suitably programmed apparatuses such as a general purpose computer, personal digital assistant, mobile telephone (such as a WAP or 3G-compliant phone) and so on. Since the present invention can be implemented as software, each and every aspect of the present invention thus encompasses computer software implementable on a programmable device. The computer software can be provided to the programmable device using any conventional carrier medium (carrier means). The carrier medium can compromise a transient carrier medium such as an electrical, optical, microwave, acoustic or radio frequency signal carrying the computer code. An example of such a transient medium is a TCP/IP signal carrying computer code over an IP network, such as the Internet. The carrier medium can also comprise a storage medium for storing processor readable code such as a floppy disk, hard disk, CD ROM, magnetic tape device or solid state memory device.

Numerous additional modifications and variations are possible in light of the above teachings. It is therefore to be understood that, within the scope of the above teachings, the present disclosure may be practiced otherwise than as specifically described herein. With some embodiments having thus been described, it will be obvious that the same may be varied in many ways. Such variations are not to be regarded as a departure from the scope of the present disclosure and appended claims, and all such modifications are intended to be included within the scope of the present disclosure and appended claims.

**Claims**

1. An information processing apparatus (103) comprising:

    an acquisition unit (121) to acquire a distance image having distance data for each pixel;
    a generation unit (132) to generate first correspondence data based on the distance image, the first correspondence data associating a position of a pixel in a horizontal direction and a position of a pixel in a depth direction;
    a detection unit (143) to detect an aggregation area of pixels in the distance data from the first correspondence data;
    an extraction unit (143) to extract an outline of the aggregation area detected by the detection unit (140); and
    a separation unit (144) to separate the aggregation area into a plurality of sub-aggregation areas based on the outline extracted by the extraction unit (143).

2. The information processing apparatus (103) according to claim 1,
   wherein the separation unit (144) separates the aggregation area when the outline extracted by the extraction unit (143) includes a plurality of surfaces in a common direction.

3. The information processing apparatus (103) according to claim 2,
   wherein the extraction unit (143) sets, for each of the plurality of pixels constituting the outline, direction data representing a direction to connect with another pixel of the plurality of pixels.

**4.** The information processing apparatus (103) according to claim 3,
wherein the plurality of surfaces includes a plurality of side surfaces,
wherein the separation unit (144) determines whether the plurality of side surfaces in the common direction is present based on the direction data set for each of the plurality of pixels.

**5.** The information processing apparatus (103) according to claim 4,
wherein the separation unit (144) searches each row of an area of interest including the aggregation area along the horizontal direction to count pixels with respect to the direction data having a common vertical direction that is the direction to connect with another pixel;
identifies, as a pixel of interest, second-to-last counted pixels having the direction data representing the common vertical direction; and
generates second correspondence data in which the position in the horizontal direction is associated with a frequency value corresponding to a number of the pixel of interest identified in the depth direction.

**6.** The information processing apparatus (103) according to claim 5,
wherein the plurality of side surfaces includes at least a first side surface and a second side surface,
wherein the separation unit (144) determines whether a frequency value corresponding to the second side surface of the plurality of side surfaces exceeds a threshold value based on the second correspondence data, and
wherein, when the frequency value corresponding to the second side surface exceeds the threshold value, the separation unit (144) identifies the greatest frequency value in the second correspondence data as a separation target.

**7.** The information processing apparatus (103) according to claim 6,
wherein the separation unit (144) identifies a position in the horizontal direction corresponding to a position farthest from a horizontal axis of the second correspondence data in the depth direction within the aggregation area, as a separation position in a direction from the position in the horizontal direction corresponding to the greatest frequency value in the second correspondence data to a position corresponding to the first side surface.

**8.** An imaging device (99) comprising the image processing apparatus (103) according to any of claims 1 to 7.

**9.** A device control system (100) comprising:

the imaging device (99) according to claim 8; and
a control unit (104) to control a control target based on a detection result of the imaging device (99).

**10.** A mobile object (101) comprising the device control system (100) according to claim 9, wherein the control target of the control unit (104) is the mobile object (101).

**11.** An information processing method comprising:

acquiring a distance image having distance data for each pixel;
generating, based on the distance data, first correspondence data associating a position of a pixel in a horizontal direction and a position of a pixel in a depth direction;
detecting an aggregation area of pixels of the distance data from the first correspondence data;
extracting an outline of the aggregation area; and
separating the aggregation area into a plurality of sub-aggregation areas based on characteristics of the outline extracted in the extracting.

**12.** A carrier means carrying computer readable code for controlling a computer to carry out the method of claim 11.

# FIG. 1

```
                                      101
                      106    ┌──────────────────┐      100
                       │     │  IMAGING UNIT    │~102
                       │     └──────────────────┘
                       │     ┌──────────────────┐~103
                       │     │  ANALYSIS UNIT   │
                       │     └──────────────────┘
                      105                              104
             ┌──────────────────┐        ┌──────────────────┐
             │   DISPLAY UNIT   │◄───────│   CONTROL UNIT   │
             └──────────────────┘        └──────────────────┘
```

# FIG. 2

```
        102   1A                    1B              99

     5A ┌──────────────┬──────────────┐ 5B
        │   ◯          │      ◯       │
     6A │  ▭           │     ▭        │ 6B
        │ ┌────┐       │   ┌────┐     │
     7A │ │    │       │   │    │     │ 7B
        └─┴────┴───────┴───┴────┴─────┘

     103 ┌───────────────────────────────┐
      11 │                               │
      16 │ ┌──────────┐   ┌──────────┐   │ 18
         │ │  FPGA    │   │   RAM    │   │
         │ └──────────┘   └──────────┘   │
         │ ┌──────────┐   ┌──────────┐   │ 17
         │ │   CPU    │   │   ROM    │   │
      15 │ │          │   │ (THREE-  │   │
         │ └──────────┘   │DIMENSIONAL│  │
         │                │ OBJECT   │   │
         │                │RECOGNITION│  │
         │            10  │ PROGRAM) │   │
      19 │ ┌──────────┐   │          │   │
         │ │SERIAL IF │   └──────────┘   │
         │ └──────────┘   ┌──────────┐   │ 20
         │                │ DATA IF  │   │
         └────────┬───────┴──────────┴───┘
                  │              ▲
         RECOGNITION DATA    CAN DATA
```

# FIG. 3

## FIG. 4

ANALYSIS UNIT `103`

IMAGING UNIT `102` → PRE-PROCESSING UNIT `111` → PARALLEL IMAGE GENERATION UNIT `112` → DISPARITY IMAGE GENERATION UNIT `113` → DISPARITY IMAGE → OBJECT DETECTION PROCESSING UNIT `114` → OBJECT DETECTION RESULT

## FIG. 5

OBJECT DETECTION PROCESSING UNIT `114`

DISPARITY IMAGE → ACQUISITION UNIT `121` → ROAD-SURFACE DETECTION UNIT `122` → CLUSTERING PROCESSING UNIT `123` → TRACKING PROCESSING UNIT `124` → OBJECT DETECTION RESULT

EP 3 327 624 A1

# FIG. 6

ROAD-SURFACE DETECTION PROCESSING UNIT ⌐122

ROAD SURFACE ESTIMATION UNIT ⌐131 → GENERATION UNIT ⌐132

# FIG. 7

VEHICLE

200cm OR MORE

150cm TO 200cm

0cm TO 150cm

HUMAN GROUP G1

HUMAN GROUP G2

POLE

# FIG. 8

# FIG. 9

# FIG. 10

```
                                                    ┌123
┌──────────────────────────────────────────────────────────┐
│              CLUSTERING PROCESSING UNIT                    │
│                                          ┌140              │
│   ┌──────────────────────────────────────────────────┐   │
│   │  ISOLATED-AREA DETECTION PROCESSING UNIT         │   │
│   └──────────────────────────────────────────────────┘   │
│                         │                                 │
│                         ▼            ┌141                 │
│   ┌──────────────────────────────────────────────────┐   │
│   │     SURFACE DETECTION PROCESSING UNIT            │   │
│   └──────────────────────────────────────────────────┘   │
│                         │                                 │
│                         ▼            ┌150                 │
│   ┌──────────────────────────────────────────────────┐   │
│   │     DISPARITY IMAGE PROCESSING UNIT              │   │
│   └──────────────────────────────────────────────────┘   │
│                         │                                 │
│                         ▼            ┌160                 │
│   ┌──────────────────────────────────────────────────┐   │
│   │        REJECTION PROCESSING UNIT                 │   │
│   └──────────────────────────────────────────────────┘   │
└──────────────────────────────────────────────────────────┘
```

# FIG. 11

# FIG. 12

# FIG. 13

# FIG. 14

| OBJECT TYPE | WIDTH | HEIGHT | DEPTH |
|---|---|---|---|
| MOTORBIKE, BICYCLE | <1100 | <2500 | >1100 |
| PEDESTRIAN | <1100 | <2500 | <=1000 |
| COMPACT CAR | <1700 | <1700 | <10000 |
| STANDARD-SIZED CAR | <1700 | <2500 | <10000 |
| TRUCK | <3500 | <3500 | <15000 |
| OTHER | THOSE FAILING TO FALL WITHIN THE ABOVE-DESCRIBED SIZES | | |

UNIT (mm)

# FIG. 15

TOO WIDE (REJECTION)

TOO WIDE (REJECTION)

# FIG. 16

```
        ┌─────────┐
        │  START  │
        └─────────┘
             │
             ▼
┌──────────────────────────────────┐
│  ISOLATED-AREA DETECTION PROCESS │ ~S1
└──────────────────────────────────┘
             │
             ▼
┌──────────────────────────────────┐
│     SURFACE DETECTION PROCESS    │ ~S2
└──────────────────────────────────┘
             │
             ▼
┌──────────────────────────────────┐
│      DISPARITY IMAGE PROCESS     │ ~S3
└──────────────────────────────────┘
             │
             ▼
┌──────────────────────────────────┐
│         REJECTION PROCESS        │ ~S4
└──────────────────────────────────┘
             │
             ▼
        ┌─────────┐
        │   END   │
        └─────────┘
```

# FIG. 17

```
        ┌─────────┐
        │  START  │
        └─────────┘
             │
             ▼
┌──────────────────────────────────────┐
│           LABELING PROCESS           │ ~S21
└──────────────────────────────────────┘
             │
             ▼
┌──────────────────────────────────────┐
│  DETECTED-RECTANGLE CREATION PROCESS │ ~S22
└──────────────────────────────────────┘
             │
             ▼
┌──────────────────────────────────────┐
│           SIZE CHECK PROCESS         │ ~S23
└──────────────────────────────────────┘
             │
             ▼
┌──────────────────────────────────────┐
│        FREQUENCY CHECK PROCESS       │ ~S24
└──────────────────────────────────────┘
             │
             ▼
        ┌─────────┐
        │   END   │
        └─────────┘
```

# FIG. 18

PIXEL OF INTEREST

# FIG. 19

┌141
SURFACE-DETECTION PROCESSING UNIT

┌142
INTERPOLATION PROCESSING UNIT

┌143
EXTRACTION UNIT

┌144
SEPARATION UNIT

# FIG. 20

```
        ┌─────────┐
        │  START  │
        └─────────┘
             │
             ▼
┌────────────────────────────┐
│   INTERPOLATING PROCESS     │──S100
└────────────────────────────┘
             │
             ▼
┌────────────────────────────┐
│  OUTLINE EXTRACTION PROCESS │──S101
└────────────────────────────┘
             │
             ▼
┌────────────────────────────┐
│      SEPARATION PROCESS     │──S102
└────────────────────────────┘
             │
             ▼
        ┌─────────┐
        │   END   │
        └─────────┘
```

# FIG. 21

```
              ┌─────────┐
              │  START  │
              └─────────┘
                   │                      S111
                   ▼
     ┌──────────────────────────────────┐
     │  PERFORM START-PIXEL SEARCH PROCESS│
     └──────────────────────────────────┘
                   │            S112
                   ▼
               ╱───────────╲           NO
           ╱                   ╲
          ╱ IS THERE START PIXEL? ╲──────────┐
           ╲                   ╱             │
               ╲───────────╱                 │
                   │ YES        S113          │
                   ▼                          │
     ┌──────────────────────────────────┐    │
     │         EXTRACT OUTLINE           │    │
     └──────────────────────────────────┘    │
                   │◄─────────────────────────┘
                   ▼
              ┌─────────┐
              │   END   │
              └─────────┘
```

# FIG. 22

DETECTED RECTANGLE

PIXEL OF INTEREST

# FIG. 23

DETECTED RECTANGLE

PIXEL OF INTEREST

SEARCH ORDER

| 6 | 5 | 4 |
|---|---|---|
| 7 | | 3 |
| 0 | 1 | 2 |

PIXEL OF INTEREST

# FIG. 24

DETECTED
RECTANGLE

PIXEL OF INTEREST

# FIG. 25

DETECTED
RECTANGLE

PIXEL FIRST EXTRACTED
AS SEARCH RESULT

# FIG. 26

PIXEL HAVING SEARCH
ORDER RECORDED

# FIG. 27

START

S11
POSITION
OF OBJECT IS RIGHT OR
LEFT?
NO

YES  S12

GENERATE SECOND
CORRESPONDING INFORMATION

S13
SEPARATION
TARGET?
NO

YES  S14

PERFORM SEPARATION

END

# FIG. 28

LEFT END

RIGHT END

Diff_Right

Y-AXIS
(DEPTH
DIRECTION)

X-AXIS
(HORIZONTAL
DIRECTION)

Diff_Left

CENTER OF STANDARD U MAP

# FIG. 29

AS NO SECOND-COUNTED
PIXEL EXIST, NO TARGET
PIXEL EXISTS

# FIG. 30

SPECIFY SECOND-COUNTED
PIXEL AS PIXEL OF INTEREST

# FIG. 31

X (HORIZONTAL
DIRECTION)

P

# FIG. 32

PREDETERMINED RANGE

X (HORIZONTAL DIRECTION)

S  Q  P  R  T

# FIG. 33

DIRECTION FROM SECOND
SIDE SURFACE TO FIRST
SIDE SURFACE

PIXEL HAVING MINIMUM DISPARITY
(PIXEL HAVING MAXIMUM BLANK
AREA IN DEPTH DIRECTION)

X (HORIZONTAL
DIRECTION)

POSITION P CORRESPONDING
TO SECOND SIDE SURFACE

# FIG. 34

FIRST AGGREGATION AREA

SECOND AGGREGATION AREA

Europäisches
Patentamt
European
Patent Office
Office européen
des brevets

# EUROPEAN SEARCH REPORT

Application Number

EP 17 20 3111

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JIA WANG ET AL: "Motion Detection in Driving Environment Using U-V-Disparity", 13 January 2006 (2006-01-13), COMPUTER VISION - ACCV 2006 LECTURE NOTES IN COMPUTER SCIENCE;;LNCS, SPRINGER, BERLIN, DE, PAGE(S) 307 - 316, XP019027359, ISBN: 978-3-540-31219-2 | 1-4,8-12 | INV. G06K9/00 G06K9/46 G06K9/48 G06T7/10 |
| Y | * abstract * <br> * section 2.1 * <br> * section 2.3 * <br> * figures 2-4 * | 5-7 | |
| X | EP 2 677 462 A1 (RICOH CO LTD [JP]) 25 December 2013 (2013-12-25) * abstract * * paragraphs [0002], [0009], [0032] - [0044] * * figure 1 * | 1,8-12 | |
| Y | VENTZISLAV ALEXANDROV: "Using critical points in contours for segmentation of touching characters", PROCEEDINGS OF THE INTERNATIONAL CONFERENCE ON COMPUTER SYSTEMS AND TECHNOLOGIES, COMPSYSTECH 2004, 1 January 2004 (2004-01-01), pages IIIA.4-1-IIIA.4-5, XP055467837, * abstract * * page 3 - page 4 * | 5-7 | TECHNICAL FIELDS SEARCHED (IPC) <br><br> G06K <br> G06T |

-/--

The present search report has been drawn up for all claims

| Place of search | Date of completion of the search | Examiner |
|---|---|---|
| The Hague | 18 April 2018 | Bouganis, Alexandros |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

Application Number

EP 17 20 3111

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ZHENCHENG HU ET AL: "U-V-disparity: an efficient algorithm for stereovision based scene analysis", INTELLIGENT VEHICLES SYMPOSIUM, 2005. PROCEEDINGS. IEEE LAS VEGAS, NV, USA JUNE 6-8, 2005, PISCATAWAY, NJ, USA,IEEE, PISCATAWAY, NJ, USA, 6 June 2005 (2005-06-06), pages 48-54, XP010833942, DOI: 10.1109/IVS.2005.1505076 ISBN: 978-0-7803-8961-8 * sections III.C-III.D * * section IV * | 1-12 | |

-----

TECHNICAL FIELDS
SEARCHED      (IPC)

The present search report has been drawn up for all claims

| Place of search | Date of completion of the search | Examiner |
|---|---|---|
| The Hague | 18 April 2018 | Bouganis, Alexandros |

EPO FORM 1503 03.82 (P04C01)

## ANNEX TO THE EUROPEAN SEARCH REPORT
## ON EUROPEAN PATENT APPLICATION NO.

EP 17 20 3111

This annex lists the patent family members relating to the patent documents cited in the above-mentioned European search report.
The members are as contained in the European Patent Office EDP file on
The European Patent Office is in no way liable for these particulars which are merely given for the purpose of information.

18-04-2018

| Patent document cited in search report | | Publication date | Patent family member(s) | | Publication date |
|---|---|---|---|---|---|
| EP 2677462 | A1 | 25-12-2013 | CN | 103390268 A | 13-11-2013 |
| | | | EP | 2677462 A1 | 25-12-2013 |
| | | | JP | 6119409 B2 | 26-04-2017 |
| | | | JP | 2013239167 A | 28-11-2013 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H10283461 A
- JP 3349060 B